# EUROPÄISCHE PATENTSCHRIFT

(11) **EP 1 508 735 B1**
(45) Veröffentlichungstag und Bekanntmachung des Hinweises auf die Patenterteilung: **25.01.2006**
(21) Anmeldenummer: 04018662.9
(22) Anmeldetag: 06.08.2004
(51) Int. Cl.: F16K 31/40

(54) **Ventilanordnung für flüssige Medien**
Valve arrangement for fluids
Arrangement de soupapes pour fluides

(30) Priorität: 21.08.2003 DE 10338332
(43) Veröffentlichungstag der Anmeldung: 23.02.2005
(73) Patentinhaber: A. und K. Müller GmbH & Co. KG, 40595 Düsseldorf (DE)
(72) Erfinder: Nussbaum, Daniel, 40479 Düsseldorf (DE); Berger, Gerd, 40593 Düsseldorf (DE); Glaus, Uwe, 40593 Düsseldorf (DE); Riedel Heinz-Dieter, 40593 Düsseldorf (DE)
(74) Vertreter: Feder, Wolf-Dietrich

(56) Entgegenhaltungen:
- EP-A- 0 401 468
- GB-A- 751 031
- US-B1- 6 508 272

## Beschreibung

Die Erfindung betrifft eine Ventilanordnung zum gleichzeitigen Öffnen und Absperren zweier getrennter Zuleitungen für flüssige Medien, insbesondere für kaltes und heißes Wasser, mit den Merkmalen aus dem Oberbegriff des Patentanspruchs 1. Eine derartige Ventilanordnung ist bekannt und beispielsweise in EP 0 401 468 A2 beschrieben. Bei der bekannten Ventilanordnung besitzt die elektromagnetische Steuervorrichtung zur Ansteuerung der beiden Servoventile eine Magnetspule, in deren Spulenachse ein Führungsrohr angeordnet ist, in welchem zwei Magnetanker zu beiden Seiten der Quermittelebene der Magnetspule verschiebbar angeordnet sind, wobei an den voneinander abgewandten Enden der Magnetanker jeweils eine Magnetankerdichtung angeordnet ist, mittels der ein den Steuerraum mit dem jeweiligen Ventilauslass verbindender Entlastungskanal verschließbar ist.

Bei der bekannten Ventilanordnung ist gemäß einem Ausführungsbeispiel aus Platzgründen die gemeinsame elektromagnetische Steuervorrichtung im Raum zwischen den beiden Zuleitungen angeordnet. Dadurch, dass zwei unterschiedliche, von der gleichen Magnetspule betätigte, koaxial zueinander angeordnete Magnetanker vorhanden sind, ergibt sich ein relativ großer Platzbedarf im Raum zwischen den beiden Zuleitungen, der insbesondere im Sanitärbereich nicht immer zur Verfügung steht.

Der Erfindung liegt die Aufgabe zugrunde, eine Ventilanordnung mit den Merkmalen aus dem Oberbegriff des Patentanspruchs 1 so auszugestalten, dass einerseits die Ventilanordnung mit sehr geringem Raumbedarf zwischen den beiden Zuleitungen angeordnet werden kann und andererseits Kosten- und Energiebedarf sowie die Fehlermöglichkeiten der Anordnung reduziert werden. Weiterhin sollte eine Sicherheitseinrichtung vorgesehen sein, durch welche verhindert wird, dass bei Anwendung der Ventilanordnung, beispielsweise in einer Duschapplikation, es bei Ausfall der Kaltwasserversorgung zu gefährlichen Verbrühungen kommen kann, wenn nur noch heißes Wasser ausgegeben wird.

Die Lösung dieser Aufgabe erfolgt erfindungsgemäß mit den Merkmalen aus dem kennzeichnenden Teil des Patentanspruchs 1. Vorteilhafte Weiterbildungen der Erfindung sind in den abhängigen Ansprüchen beschrieben.

Der Grundgedanke der Erfindung besteht darin, einerseits die gemeinsame elektromagnetische Steuervorrichtung als lediglich einen gemeinsamen Magnetanker aufweisendes Pilotventil auszubilden, durch den ein in den beiden Steuerräumen der Servo-Ventile gemeinsamer Entlastungskanal verschließbar ist und in oder vor dem gemeinsamen Entlastungskanal ein in Serie zum Pilotventil geschaltetes, hydraulisch ansteuerbares Sicherheitsventil anzuordnen, das vom Eingangsdruck in einer der beiden Zuleitungen angesteuert ist und den Entlastungskanal nur öffnet, wenn in der betreffenden Zuleitung ein vorgegebener Mindestdruck herrscht. Bei Anwendung der erfindungsgemäßen Ventilanordnung in einer Duschapplikation ist die Zuleitung, von der her das Sicherheitsventil angesteuert wird, vorzugsweise die Kaltwasser führende Zuleitung. Die erfindungsgemäße Ausbildung der Ventilanordnung hat zur Folge, dass ein Öffnen der beiden Servo-Ventile vom Pilotventil her nur möglich ist, wenn in der Kaltwasser führenden Zuleitung der vorgegebene Mindestdruck herrscht, und dadurch wird verhindert, dass etwa nur heißes Wasser abgegeben wird. Die erfindungsgemäße Ventilanordnung lässt sich sehr kompakt aufbauen, indem das Sicherheitsventil in einem im wesentlichen zwischen den beiden Zuleitungen liegenden Ventilblock angeordnet ist, der die Zu- und Abflusskanäle sowie den Steuerkanal zum Sicherheitsventil enthält. An den Ventilblock kann dann seitlich das Pilotventil angeschlossen sein, wobei die Zu- und Abführungsleitungen des Pilotventils ebenfalls durch den Ventilblock geführt sind. An die beiden Enden dieses Ventilblocks können die Ventilgehäuse der Servo-Ventile angesetzt sein, wobei die Steuerräume der Servo-Ventile in den Ventilblock eingearbeitet sein können und der gemeinsame Entlastungskanal ebenfalls im Ventilblock angeordnet ist.

Im folgenden wird anhand der beigefügten Zeichnungen ein Ausführungsbeispiel der erfindungsgemäßen Ventilanordnung sowie die Funktionsweise der Ventilanordnung näher erläutert.

In den Zeichnungen zeigen:
Fig. 1 in einem hydraulischen Schaltbild den Aufbau der Ventilanordnung zum gleichzeitigen Öffnen und Absperren zweier getrennter Zuleitungen für kaltes und heißes Wasser;
Fig. 2 einen Schnitt durch die Ventilanordnung nach der Linie A-A in Fig. 3;
Fig. 3 einen Schnitt durch die Ventilanordnung nach der Linie B-B in Fig. 2;
Fig. 4 in gegenüber Fig. 3 vergrößerter Darstellung einen Ausschnitt aus der Darstellung gem. Fig. 3 im Bereich von Pilotventil und Sicherheitsventil;
Fig. 5 eine perspektivische Darstellung der Ventilanordnung nach den Fig. 2 bis 4 mit Aufreißungen;
Fig. 6 in einer Darstellung analog Fig. 5 die Ventilanordnung von außen gesehen.

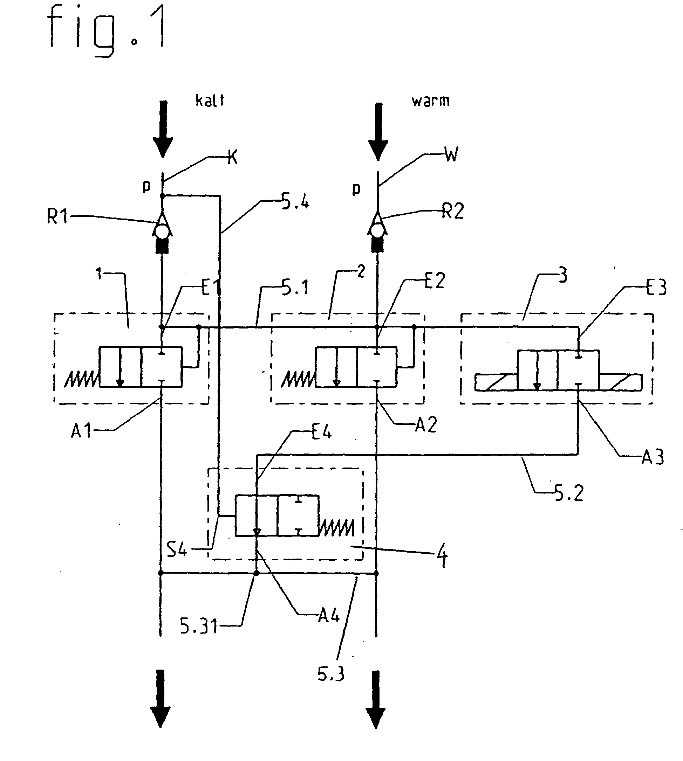

In Fig. 1 ist eine Ventilanordnung zum gleichzeitigen Öffnen und Absperren zweier getrennter Zuleitungen für kaltes und heißes Wasser in Form eines hydraulischen Schaltbildes dargestellt.

An die Kaltwasser führende Zuleitung K ist über ein Rückschlagventil R1 ein erstes Servo-Ventil 1 an sich bekannter Bauart angeschlossen mit einem Ventileingang E1 und einem Ventilausgang A1. In der gleichen Weise ist an eine Warmwasser führende Zuleitung W über ein Rückschlagventil R2 ein zweites Servo-Ventil 2 angeschlossen mit einem. Ventileingang E2 und einem Ventilausgang A2. Der genauere Aufbau dieser beiden Servo-Ventile wird weiter unten erläutert. Zur Ansteuerung der beiden Servo-Ventile 1 und 2 dient ein Pilotventil 3 mit einem über einen Zulaufkanal 5.1 an die beiden Steuerräume der Servo-Ventile 1 und 2 angeschlossenen Ventileingang E3 und einem an einen Ablaufkanal 5.2 angeschlossenen Ventilausgang A3. Das Pilotventil 3 ist als Elektromagnetventil ausgebildet. Der Ablaufkanal 5.2 des Pilotventils 3 ist gleichzeitig Zulaufkanal für ein Sicherheitsventil 4 mit einem Ventileingang E4 und einem Ventilausgang A4, der über einen Ablaufkanal 5.31 an den gemeinsamen Entlastungskanal 5.3 angeschlossen ist, der mit den beiden Ventüausgängen A1 und A2 der Servo-Ventile 1 und 2 verbunden ist. Das Sicherheitsventil ist mit seinem Steuereingang S4 an die Kaltwasser führende Zuleitung K vor dem Ventileingang E1 des betreffenden Servo-Ventils 1 angeschlossen.

Im geschlossenen Zustand des Pilotventils 3 herrscht, wie an sich bekannt und weiter unten erläutert, in den Steuerräumen der beiden Servo-Ventile 1 und 2 ein die beiden Servo-Ventile im geschlossenen Zustand haltender Gegendruck. Um ein Öffnen beider Servo-Ventile 1 und 2 zu erreichen, wird das Pilotventil in der Weise angesteuert, dass der Durchfluss vom Zulaufkanal 5.1 zum Ablaufkanal 5.2 freigegeben wird. Wenn dann sich das Sicherheitsventil 4 in der Öffnungsstellung befindet, sind die beiden Steuerräume der Servo-Ventile 1 und 2 an den gemeinsamen Entlastungskanal 5.3 angeschlossen, so dass die Druckentlastung der beiden Steuerräume zum Öffnen der beiden Servo-Ventile 1 und 2 führt. Sollte die Kaltwasserzufuhr unterbrochen sein und somit der Druck P in der Kaltwasser führenden Zuleitung unterhalb eines vorgegebenen Wertes liegen, so schließt das Sicherheitsventil 4, und es ist auch bei geöffnetem Pilotventil 3 kein Anschluss der Steuerräume der Servo-Ventile 1 und 2 über die Kanäle 5.1 und 5.2 an den gemeinsamen Entlastungskanal 5.3 möglich. Das heißt, die Servo-Ventile 1 und 2 können nicht öffnen. Das Sicherheitsventil 4 ist als sogenanntes NC-Ventil aufgebaut, das bei fehlendem Ansteuerdruck geschlossen ist.

In der in Fig. 1 dargestellten Ventilanordnung ist sichergestellt, dass beim Ausfall der Kaltwasserversorgung kein heißes Wasser abgegeben werden kann.

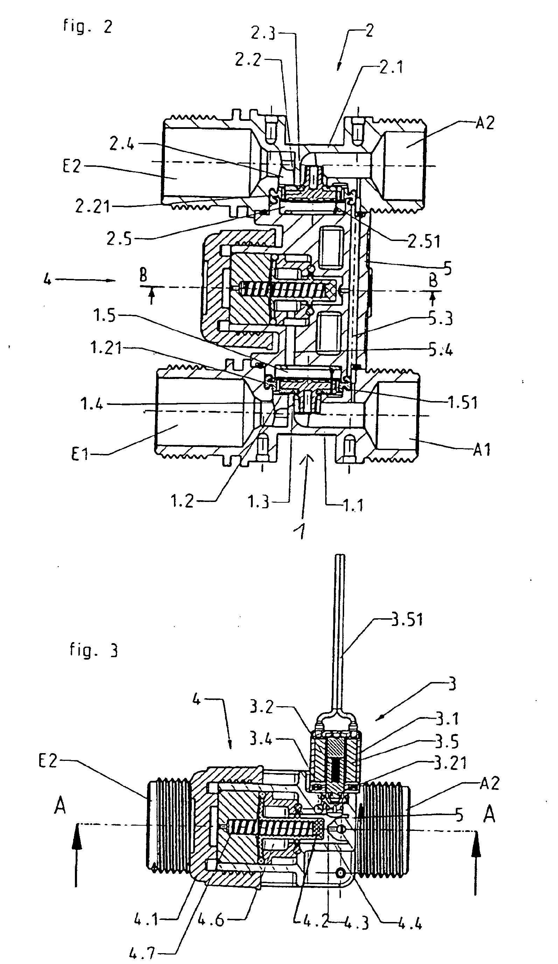

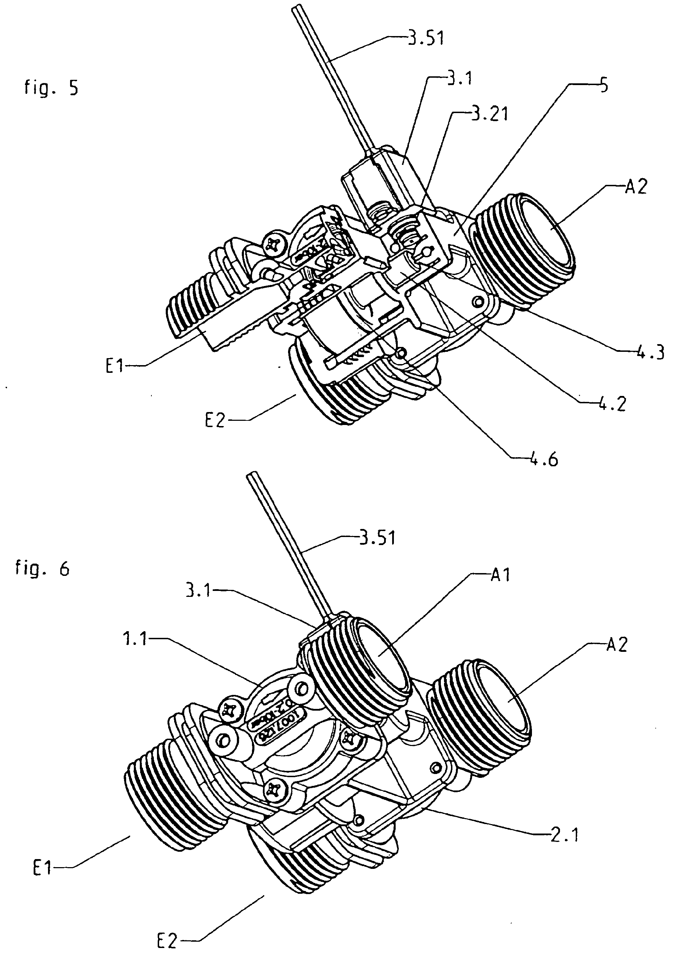

Im folgenden wird anhand der Fig. 2 bis 6 der konstruktive Aufbau der Ventilanordnung mit der Funktionsweise gemäß Fig. 1 näher erläutert.

Die beiden Servo-Ventile 1 und 2 sind im Prinzip so aufgebaut, wie auch in EP 0 401 468 A2 beschrieben.

Durch die in Fig. 2 nicht dargestellten Zuleitungen strömt kaltes Wasser zum Eingang E1 des Servo-Ventils 1 und warmes Wasser zum Eingang E2 des Servo-Ventils 2. An die Ausgänge A1 und A2 der Servo-Ventile kann sich eine nicht dargestellte Mischeinrichtung anschließen.

Die Anschlüsse E1 und A1 bzw. E2 und A2 sind im dargestellten Ausführungsbeispiel in relativ geringem Abstand voneinander angeordnet, so dass zwischen ihnen ein Ventilblock 5 angeordnet sein kann, in bzw. an dem das Sicherheitsventil 4 und das Pilotventil 3 angeordnet sind. Die Servo-Ventile besitzen Ventilgehäuse 1.1 und 2.1, die jeweils an die voneinander abgewandten Enden des Ventilblocks 5 angesetzt sind. In den Ventilgehäusen 1.1 bzw. 2.1 ist jeweils ein Differentialkolben 1.21 bzw. 2.21 bewegbar angeordnet. Die Differentialkolben tragen jeweils die in eine Rollmembran integrierten Ventilteller 1.2 bzw. 2.2, welche einem Ventilsitz 1.3 bzw. 2.3 gegenüberliegen. Die Ventileingänge E1 bzw. E2 sind jeweils mit einem Druckraum 1.4 bzw. 2.4 verbunden, der über den Ventilsitz 1.3 bzw. 2.3 mit dem Ventilausgang A1 bzw. A2 verbunden ist. Die Druckräume 1.4 bzw. 2.4 liegen auf der einen Seite der Ventilteller 1.2 bzw. 2.2, während auf der anderen Seite der Ventilteller bzw. der Differentialkolben 1.21 und 2.21 jeweils ein Steuerraum 1.5 bzw. 2.5 angeordnet ist. Diese Steuerräume sind, wie aus Fig. 2 ersichtlich, in die Endflächen des Ventilblocks 5 eingearbeitet. Jeder der Steuerräume 1.5 und 2.5 ist an den bereits erwähnten Zulaufkanal 5.1 zum Pilotventil 3 angeschlossen und somit über den Ablaufkanal 5.2 des Pilotventils und das Sicherheitsventil 4 an den Entlastungskanal 5.3. Die Kanäle 5.1, 5.2 und 5.3 sind im Ventilblock 5 angeordnet. Weiterhin sind die Steuerräume 1.5 und 2.5 über eine in den Differentialkolben jeweils angeordnete Steuerbohrung 1.51 bzw. 2.51 mit dem Druckraum 1.4 bzw. 2.4 verbunden.

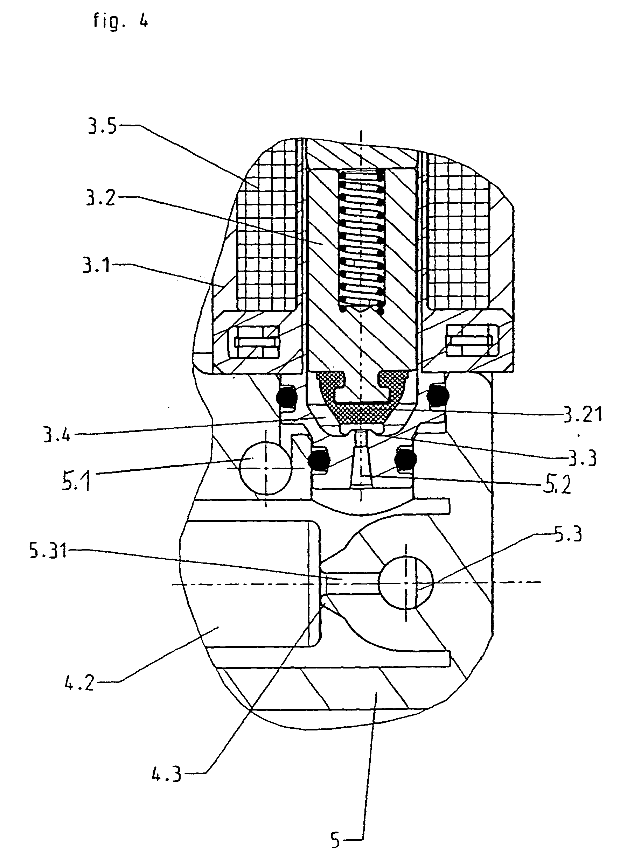

Das Pilotventil 3 ist seitlich an den Ventilblock 5 angesetzt. Es besitzt ein Gehäuse 3.1, in dem sich eine Magnetspule 3.5 befindet, in welcher ein Magnetanker 3.2 geführt ist, der an seinem inneren Ende eine Magnetankerdichtung 3.21 trägt, die innerhalb der Pilotventilkammer 3.4 einem Pilotventilsitz 3.3 gegenüberliegt. In die Pilotventilkammer 3.4 mündet der Zulaufkanal 5.1 für das Pilotventil (s. Fig. 4), der über den sich an den Pilotventilsitz anschließenden Ablaufkanal 5.2 an die ebenfalls innerhalb des Ventilblocks 5 angeordnete Ventilkammer 4.4 des Sicherheitsventils 4 angeschlossen ist. Das in den Ventilblock integrierte Sicherheitsventil 4 ist als Membranventil aufgebaut. Es besitzt ein seinem Ventilsitz 4.3 in der Ventilkammer 4.4 gegenüberliegendes Verschlussorgan 4.2, das in eine Steuermembran 4.6 integriert ist, die einen gegen die Ventilkammer 4.4 abgedichteten Steuerraum 4.5 begrenzt. Die Ventilkammer 4.4 des Sicherheitsventils ist über den Ventilsitz 4.3 an den gemeinsamen Entlastungskanal 5.3 angeschlossen (Fig. 4). Der Steuerraum 4.5 des Sicherheitsventils 4 ist über einen Steuerkanal 5.4 an den Steuerraum 1.5 des Servo-Ventils 1 und somit an den Eingang E1 des Kaltwasser führenden Servo-Ventils 1 angeschlossen. Die Steuermembran 4.6 steht unter der Kraftwirkung einer Feder 4.7. Der Zugang zu den Teilen des Sicherheitsventils 4 ist durch eine auf den Ventilblock 5 aufgeschraubte Ventilkappe 4.1 abgedeckt.

Im Betrieb des Sicherheitsventils 4 wirkt der durch den Steuerkanal 5.4 anstehende Kaltwasserdruck auf die Steuermembran 4.6, die sich gegen die Wirkung der Feder 4.7 nach außen wölbt und dadurch das Verschlussorgan 4.2 vom Ventilsitz 4.3 abhebt.

Dem Pilotventil 3 wird über eine elektrische Zuführungsleitung 3.51 die zur Betätigung notwendige elektrische Spannung zugeführt. Die Funktonsweise der Ventilanordnung nach Fig. 2 bis 6 wurde bereits anhand von Fig. 1 oben erläutert.

## Patentansprüche

1. Ventilanordnung zum gleichzeitigen Öffnen und Absperren zweier getrennter Zuleitungen für flüssige Medien, insbesondere für kaltes und heißes Wasser, wobei in jeder der Zuleitungen ein eigenmediumbetätigtes, durch ein elektromagnetisches Pilotventil gesteuertes Servo-Ventil angeordnet ist mit einem in einem Ventilgehäuse bewegbar angeordneten, den Ventilteller tragenden Differentialkolben, an dessen einer Seite ein mit dem Ventileingang verbundener Druckraum angeordnet ist, der über einen dem Ventilteller gegenüberliegenden Ventilsitz mit dem Ventilausgang verbunden ist, und an dessen anderer Seite ein Steuerraum angeordnet ist, der über einen mittels eines Pilotventils verschließbaren Entlastungskanal mit dem Ventilausgang und über eine im Differentialkolben angeordnete Steuerbohrung mit dem Druckraum verbunden ist, wobei beide Servo-Ventile von einer gemeinsamen elektromagnetischen Steuervorrichtung her angesteuert werden, **dadurch gekennzeichnet, dass** die gemeinsame elektromagnetische Steuervorrichtung als ein beide Servo-Ventile (1, 2) gleichzeitig ansteuerndes, einen gemeinsamen Magnetanker (3.2) aufweisendes Pilotventil (3) ausgebildet ist, dessen Ventileingang (E3) mit den Steuerräumen (1.5, 2.5) beider Servo-Ventile (1, 2) verbunden ist und dessen Ventilausgang (A3) über einen beiden Servo-Ventilen (1, 2) gemeinsamen Entlastungskanal (5.3) mit den Ausgängen (A1, A2) der Servo-Ventile (1, 2) verbunden ist, wobei in oder vor den gemeinsamen Entlastungskanal (5.3) ein hydraulisch ansteuerbares Sicherheitsventil (4) eingeschaltet ist, dessen Steuereingang (S4) an eine der Zuleitungen (K) angeschlossen ist derart, dass der Entlastungskanal (5.3) nur geöffnet wird, wenn in der betreffenden Zuleitung (K) ein vorgegebener Mindestdruck herrscht.

2. Ventilanordnung nach Anspruch 1, **dadurch gekennzeichnet, dass** der Steuereingang(S4) des Sicherheitsventils (4) an die Kaltwasser führende Zuleitung (K) angeschlossen ist.

3. Ventilanordnung nach Anspruch 1 oder 2, **dadurch gekennzeichnet, dass** das Sicherheitsventil (4) als Membranventil aufgebaut ist mit mindestens einer, eine Steuerkammer (4.5) begrenzende, unter Federkraft stehende Membran (4.6), an der in einer Sicherheits-Ventilkammer (4.4) ein Verschlussorgan (4.2) befestigt ist, das einem Sicherheits-Ventilsitz (4.3) gegenüberliegt, über den die an den Ventilausgang (A3) des Pilotventils (3) angeschlossene Sicherheits-Ventilkammer (4.4) mit dem zu den Ausgängen der Servo-Ventile (1, 2) führenden Entlastungskanal (5.3) verbindbar ist, wobei die Steuerkammer (4.5) über einen Steuerkanal (5.4) mit dem Ventileingang (E1) eines der Servo-Ventile (1) verbunden ist.

4. Ventilanordnung nach Anspruch 3, **dadurch gekennzeichnet, dass** das Sicherheitsventil (4) in einem im wesentlichen zwischen den beiden Zuleitungen (K, W) liegenden Ventilblock (5) angeordnet ist, der die Zu- und Abflusskanäle (5.2, 5.3) sowie den Steuerkanal (5.4) zum Sicherheitsventil (4) enthält.

5. Ventilanordnung nach Anspruch 4, **dadurch gekennzeichnet, dass** an die beiden Enden des Ventilblocks (5) die Ventilgehäuse (1.1, 2.1) der Servo-Ventile (1, 2) angesetzt sind, wobei die Steuerräume (1.5, 2.5) der Servo-Ventile (1, 2) in den Ventilblock (5) eingearbeitet sind und der Entlastungskanal (5.3) im Ventilblock (5) angeordnet ist.

6. Ventilanordnung nach Anspruch 5, **dadurch gekennzeichnet, dass** an den Ventilblock (5) seitlich das Pilotventil (3) angesetzt ist und die Zu- und Abführungskanäle (5.1, 5.2) des Pilotventils (3) durch den Ventilblock (5) geführt sind.

## Claims

1. Valve arrangement for the simultaneous opening and shutting-off of two separate supply lines for liquid media, in particular for cold and hot water, a servo valve being arranged in each of the supply lines, which servo valve is actuated by its own medium and controlled by an electromagnetic pilot valve and has a differential piston which is movably arranged in a valve housing and carries the valve disc, on one side of which differential piston there is arranged a pressure chamber which is connected to the valve inlet and, via a valve seat lying opposite the valve disc, to the valve outlet, and on the other side of which differential piston there is arranged a control chamber which is connected to the valve outlet via a relief duct closable by means of a pilot valve and to the pressure chamber via a control bore arranged in the differential piston, both servo valves being driven by a common electromagnetic control device, **characterised in that** the common electromagnetic control device is designed as a pilot valve (3) which drives both servo valves (1, 2) simultaneously and has a common magnet armature (3.2), the valve inlet (E3) of which pilot valve is connected to the control chambers (1.5, 2.5) of both servo valves (1, 2) and the valve outlet (A3) of which pilot valve is connected to the outlets (A1, A2) of the servo valves (1, 2) via a relief duct (5.3) common to both servo valves (1, 2), a hydraulically drivable safety valve (4) being inserted in or upstream of the common relief duct (5.3), the control inlet (S4) of which safety valve is connected to one of the supply lines (K) such that the relief duct (5.3) is only opened when a preset minimum pressure prevails in the supply line (K) concerned.

2. Valve arrangement according to Claim 1, **characterised in that** the control inlet (S4) of the safety valve (4) is connected to the cold water-conducting supply line (K).

3. Valve arrangement according to Claim 1 or 2, **characterised in that** the safety valve (4) is constructed as a diaphragm valve having at least one diaphragm (4.6) which bounds a control chamber (4.5), is under spring force and to which there is fastened in a safety valve chamber (4.4) a closure member (4.2) which lies opposite a safety valve seat (4.3), via which the safety valve chamber (4.4) connected to the valve outlet (A3) of the pilot valve (3) can be connected to the relief duct (5.3) leading to the outlets of the servo valves (1, 2), the control chamber (4.5) being connected to the valve inlet (E1) of one of the servo valves (1) via a control duct (5.4).

4. Valve arrangement according to Claim 3, **characterised in that** the safety valve (4) is arranged in a valve block (5) which lies substantially between the two supply lines (K, W) and contains the supply and discharge ducts (5.2, 5.3) and also the control duct (5.4) to the safety valve (4).

5. Valve arrangement according to Claim 4, **characterised in that** the valve housings (1.1, 2.1) of the servo valves (1, 2) are attached to the two ends of the valve block (5), the control chambers (1.5, 2.5) of the servo valves (1, 2) being incorporated in the valve block (5) and the relief duct (5.3) being arranged in the valve block (5).

6. Valve arrangement according to Claim 5, **characterised in that** the pilot valve (3) is attached laterally to the valve block (5) and the supply and discharge ducts (5.1, 5.2) of the pilot valve (3) are led through the valve block (5).

## Revendications

1. Agencement de vannes pour l'ouverture et la fermeture simultanées de deux conduites séparées pour des substances liquides, en particulier pour de l'eau froide et chaude, dans lequel une servo-vanne actionnée par la substance elle-même, commandée par une commande électromagnétique, est agencée dans chacune des conduites, cette servo-vanne ayant un piston différentiel supportant une tête de vanne agencé de façon mobile dans un corps de vanne, sur un côté duquel est agencée une chambre de pression reliée à l'entrée de vanne, qui est reliée à la sortie de vanne par le biais d'un siège de vanne situé en opposition à la tête de vanne, et sur l'autre côté duquel est agencée une chambre de commande, qui est reliée à la sortie de vanne par le biais d'un canal de décharge pouvant être fermé au moyen d'une commande de vanne et à la chambre de pression par le biais d'un alésage de commande réalisé dans le piston différentiel, les deux servo-vannes étant commandées à partir d'un dispositif de commande électromagnétique commun, **caractérisé en ce que** le dispositif de commande électromagnétique commun est réalisé comme une vanne de commande (3) présentant une armature mobile de relais commune (3.2) et commandant simultanément les deux servo-vannes (1,2), dont l'entrée de vanne (E3) est reliée avec les chambres de commande (1.5, 2.5) des deux servo-vannes (1, 2) et dont la sortie de vanne (A3) est reliée avec les sorties (A1, A2) des servo-vannes (1, 2) par le biais d'un canal de décharge (5.3) commun aux deux servo-vannes (1, 2), une vanne de sécurité (4) à commande hydraulique étant montée à l'intérieur ou en amont du canal de décharge commun (5.3), dont l'entrée de commande (S4) est reliée à l'une des conduites (K) de telle sorte que le canal de décharge (5.3) est uniquement ouvert quand une pression minimale prédéterminée est constatée dans la conduite (K) concernée.

2. Agencement de vannes selon la revendication 1, **caractérisé en ce que** l'entrée de commande (S4) de la vanne de sécurité (4) est reliée à la conduite (K) transportant l'eau froide.

3. Agencement de vannes selon l'une quelconque des revendications 1 ou 2, **caractérisé en ce que** la vanne de sécurité (4) est réalisée comme vanne à diaphragme ayant au moins un diaphragme (4.6) soumis à une force élastique, délimitant une chambre de commande (4.5), sur lequel un élément de fermeture (4.2) est fixé dans une chambre de la vanne de sécurité (4.4), lequel est situé en opposition à un siège de la vanne de sécurité (4.3), par le biais duquel la chambre de la vanne de sécurité (4.4) reliée à la sortie de vanne (A3) de la commutation pilote (3) peut être reliée avec le canal de décharge (5.3) conduisant aux sorties des servo-vannes (1, 2), la chambre de commande (4.5) étant reliée avec l'entrée de vanne (E1) de l'une des servo-vannes (1) par le biais d'un canal de commande (5.4).

4. Agencement de vannes selon la revendication 3, **caractérisé en ce que** la vanne de sécurité (4) est agencée dans un ensemble de vannes (5) situé sensiblement entre les deux conduites (K, W), qui contient les canaux d'arrivée et d'évacuation (5.2, 5.3) ainsi que le canal de commande (5.4) en direction de la vanne de sécurité (4).

5. Agencement de vannes selon la revendication 4, **caractérisé en ce que** les corps de vannes (1.1, 2.1) des servo-vannes (1, 2) sont installés aux deux extrémités de l'ensemble de vannes (5), les chambres de commande (1.5, 2.5) des servo-vannes (1, 2) étant intégrées dans l'ensemble de vannes (5) et le canal de décharge (5.3) étant agencé dans l'ensemble de vannes (5).

6. Agencement de vannes selon la revendication 5, **caractérisé en ce que** la vanne de commande (3) est installée latéralement sur l'ensemble de vannes (5) et **en ce que** les canaux d'arrivée et d'évacuation (5.1, 5.2) de la commutation pilote (3) sont guidés à travers l'ensemble de vannes (5).
